(19) Europäisches Patentamt

European Patent Office

Office européen des brevets

(11) **EP 1 236 632 B1**

(12) **FASCICULE DE BREVET EUROPEEN**

(45) Date de publication et mention
de la délivrance du brevet:
**23.07.2008 Bulletin 2008/30**

(51) Int Cl.:
***B60T 13/74*** *(2006.01)*

(21) Numéro de dépôt: **02290509.5**

(22) Date de dépôt: **01.03.2002**

(54) **Procédé et dispositif de commande de freinage**

Verfahren und Vorrichtung zur Bremssteuerung

Method and procedure for brake control

(84) Etats contractants désignés:
**BE DE GB**

(30) Priorité: **01.03.2001 FR 0102818**

(43) Date de publication de la demande:
**04.09.2002 Bulletin 2002/36**

(73) Titulaire: **RENAULT S.A.S.**
**92100 Boulogne Billancourt (FR)**

(72) Inventeurs:
- **Leminoux, Gérald**
  **78980 Longnes (FR)**
- **Richard, Arnaud**
  **92150 Suresnes (FR)**

(56) Documents cités:
**WO-A-90/15734          DE-A- 19 858 763**
**DE-A- 19 859 605**

## Description

La présente invention concerne le domaine des véhicules automobiles, voitures particulières, véhicules de transport en commun, véhicules de transport de marchandises, engins spéciaux, agricoles, de manutention, de travaux, etc.

Les freins de parking automatiques pour véhicules permettent un gain de place et un confort d'utilisation plus élevé pour le conducteur.

Le document WO 99/43968 décrit un système de frein de parking automatique possédant deux modes de fonctionnement, un premier mode en tout ou rien quand le véhicule est à l'arrêt, le serrage maximum étant détecté lorsque le courant est supérieur à un seuil prédéfini, et un deuxième mode proportionnel quand la vitesse du véhicule est supérieure à une certaine vitesse. Il n'y a pas de possibilité d'effectuer un serrage proportionnel à l'arrêt pour éviter de serrer systématiquement au serrage maximum. Le serrage maximum correspond à la pente maximum et à la charge maximum admissible du véhicule, ce qui se traduit par un surdimensionnement de l'étrier de frein et des pièces mécaniques, d'où une augmentation des coûts, ou par une fiabilité et une durabilité réduites de ces pièces. En outre, la détection de la force maximum de serrage par le seuillage du courant n'est pas suffisante, car un appel de courant très important a lieu lors de l'accélération du moteur, à chaque démarrage dudit moteur.

L'invention propose d'améliorer les freins de parking automatiques.

L'invention propose un frein de parking automatique, fiable, bon marché, et fournissant une haute sécurité d'utilisation du véhicule sur lequel il est monté.

Le procédé de commande, selon un aspect de l'invention, est destiné à un moyen de freinage d'un véhicule. On met en oeuvre une détection du courant I consommé par un moteur de serrage de frein pour en déduire une force de serrage F. Si un critère de force de serrage est supérieur à un plafond prédéterminé $F_p$, on maintient la force de serrage. Sinon, on alimente le moteur en fonction d'une consigne de serrage, ledit plafond étant une charge électrique et ledit critère étant calculé par intégration du courant consommé.

Avantageusement, ledit critère est calculé par intégration du courant consommé au dessus d'un seuil prédéterminé.

Dans un mode de réalisation de l'invention, le plafond est déterminé de façon que le moteur exerce au desserrage une force supérieure à celle rendue nécessaire par la force de serrage préalablement exercée.

Dans un mode de réalisation de l'invention, le moteur est asservi en position sur une palette de commande.

Dans un mode de réalisation de l'invention, l'ensemble formé par le moteur de serrage et le moyen de freinage est réversible, le maintien de la force de serrage est obtenu par le maintien de l'alimentation électrique du moteur à un courant maximal.

Dans un autre mode de réalisation de l'invention, l'ensemble formé par le moteur de serrage et le moyen de freinage est irréversible, le maintien de la force de serrage est obtenu par la coupure de l'alimentation électrique du moteur.

Le système de commande d'un moyen de freinage de véhicule, selon un aspect de l'invention, comprend un moteur de serrage de frein, un moyen de détection du courant I consommé par le moteur de serrage de frein pour en déduire une force de serrage F, un moyen de maintien de la force de serrage si un critère de force de serrage est supérieur à un plafond prédéterminé, et un moyen d'alimentation du moteur en fonction d'une consigne de serrage si le critère de force de serrage est inférieur audit plafond, ledit plafond étant une charge électrique et ledit critère étant calculé par intégration du courant consommé.

Dans un mode de réalisation de l'invention, le système comprend un moyen d'intégration du courant consommé au dessus d'un seuil prédéterminé.

Dans un mode de réalisation de l'invention, le système comprend une palette de commande et un moyen d'asservissement en position du moteur sur la palette de commande.

Dans un mode de réalisation de l'invention, le système comprend un moyen de commande mécanique du frein apte à inhiber l'action du moteur électrique.

Dans un mode de réalisation de l'invention, le système comprend un indicateur du fonctionnement.

L'invention propose également un véhicule équipé d'un système comprenant un moteur de serrage de frein, un moyen de détection du courant I consommé par le moteur de serrage de frein pour en déduire une force de serrage F, un moyen de maintien de l'alimentation électrique du moteur si un critère de force de serrage est supérieur à un plafond prédéterminé, et un moyen d'alimentation du moteur en fonction d'une consigne de serrage si le critère de force de serrage est inférieur audit plafond, ledit plafond étant une charge électrique et ledit critère étant calculé par intégration du courant consommé.

La présente invention sera mieux comprise à l'étude de la description détaillée d'un mode de réalisation pris à titre d'exemple nullement limitatif et illustré par les dessins annexés, sur lesquels :

- la figure 1 est une vue schématique d'un système selon l'invention;
- la figure 2 est une courbe montrant la relation entre la position de la palette et l'effort de serrage;
- la figure 3 est une vue schématique de l'unité de pilotage; et
- la figure 4 est une vue schématique de la logique d'arrêt du courant.

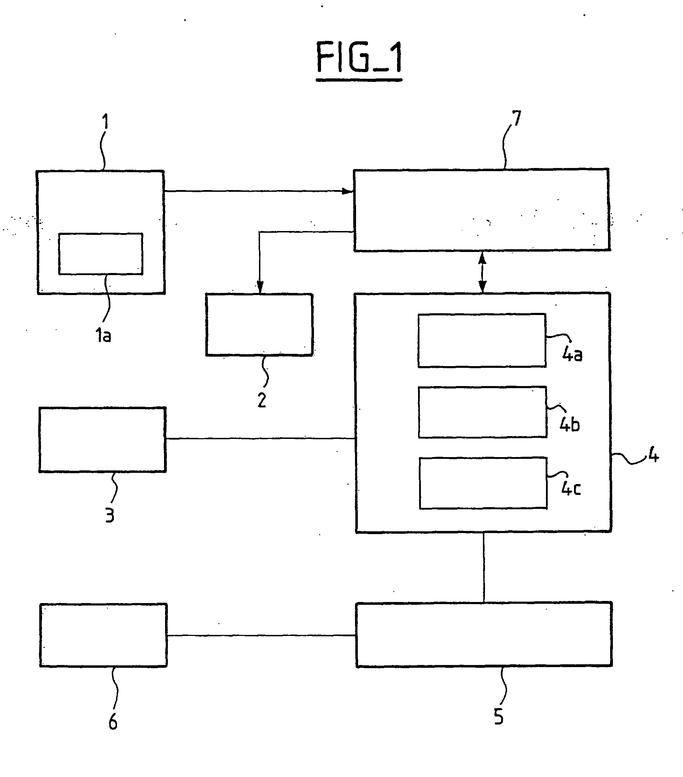

Le système, tel qu'il est illustré sur la figure 1, comprend une palette de commande 1 équipée au moins d'un capteur de position la, une interface homme-machine 2, telle qu'un voyant lumineux, une commande de secours 3 apte à être actionnée par le conducteur, un ensemble 4 comprenant un moteur électrique 4a couplé à un réducteur 4b équipé d'un capteur de position 4c, un câble de serrage 5, un ou plusieurs étriers 6 ou tambours de freinage permettant d'immobiliser le véhicule, et une unité de pilotage 7 du moteur 4a.

Un signal de position est envoyé par le capteur de position 1a à l'unité de pilotage 7. Un signal d'information peut être émis par l'unité de pilotage 7 vers l'interface homme-machine 2. L'unité de pilotage 7 est également reliée à l'ensemble 4. Une liaison mécanique est prévue entre la commande de secours 3 et l'ensemble 4. Le câble de serrage 5 est disposé entre l'ensemble 4 et le ou les étriers 6.

La position de la palette 1 détermine une consigne du conducteur et est fournie à l'unité de pilotage 7 par le capteur 1a. Le moteur 4a est asservi en position sur la consigne de position de la palette 1. La force de serrage F est estimée par la mesure et le traitement de l'intensité I du courant traversant le moteur 4a. Si la force maximum de serrage $F_{max}$ est atteinte, le système devient inactif et ceci tant que la position de la palette 1 correspond à une force de serrage supérieure à la force $F_{max}$ fournie par le moteur 4a. Il n'est pas nécessaire de maintenir le courant, car le système n'est pas réversible. Il suffit de couper l'alimentation du moteur électrique. Ceci présente l'avantage que, dans le cas d'un arrêt accidentel de l'alimentation du moteur, la force de freinage est maintenue. Toutefois, dans une variante réversible, le courant I est maintenu à sa valeur précédente. Lorsque la valeur de la consigne fournie par la palette 1 devient inférieure à cette position, le moteur 4a repasse en asservissement sur la consigne de position de la palette 1.

Pour éviter le grippage en serrage de l'étrier 6, la force maximum de serrage est inférieure à la capacité maximum du moteur 4a qui pourra être utilisée lors du desserrage. L'unité de pilotage 7 est de conception simple, en faisant appel à l'électronique analogique avec peu de composants logiques et sans qu'il soit nécessaire d'avoir une unité de traitement logiciel telle qu'un microprocesseur. L'unité de pilotage 7 est compatible avec l'utilisation par le conducteur d'un levier de commande traditionnel instrumenté tout en assurant les fonctions de frein de parking, de frein de secours dynamique, ainsi que les exigences de sécurité.

Le frein de parking électrique proposé par l'invention est intégrable simplement sur une architecture de frein de parking manuelle, reproduit le fonctionnement d'un frein de parking mécanique conventionnel tout en permettant une grande liberté de conception de l'habitacle du véhicule. Il n'est pas nécessaire de prévoir un calculateur avec microprocesseur et logiciel. Le grippage du système est évité par un serrage inférieur à la capacité de desserrage maximale. Les usures des pièces du frein sont compensées en adaptant la position du moteur à la force de freinage réelle par la mesure du courant I. Une commande de secours peut être mise en oeuvre et enclenchée de façon simple. D'éventuels défauts peuvent être détectés et affichés par l'interface homme-machine 2.

Plus particulièrement, la palette de commande 1 est un organe de commande du frein de parking électrique manipulée par le conducteur, sous la forme d'un ensemble mécanique qui peut être d'au moins l'un des deux types suivants :

    1. Organe de commande d'un frein de parking manuel mécanique traditionnel à pied ou à main.
    2. Palette de commande de serrage et desserrage.

Le capteur 1a mesure l'intégralité de la course de la palette 1.

Pour des raisons de sécurité, le capteur ainsi que sa connexion (fil et connecteur) à l'unité de pilotage moteur 7 peuvent être doublés afin d'assurer une redondance sur la commande.

L'interface homme-machine 2 fournit les informations suivantes au conducteur par exemple sous la forme de voyants lumineux :

    1. Le frein est serré : un voyant est allumé en continu.
    2. Le frein est défectueux : un voyant clignotant est allumé.

La commande de secours 3 permet au conducteur de desserrer par une action mécanique le frein si celui-ci est bloqué suite à une défaillance du système, un grippage mécanique, ou en cas de panne d'énergie électrique.

La commande de secours 3 permet de desserrer le frein de parking en découplant mécaniquement le câble 5 du réducteur 4b.

Le réenclenchement du câble 5 sur le réducteur 4b se fait automatiquement lorsque le réducteur 4b est dans la position frein relâché.

Le moteur électrique 4a est un moteur à courant continu piloté par l'unité de pilotage moteur 7. Il entraîne le réducteur 4b dont le rôle est de démultiplier le déplacement angulaire du moteur en un déplacement en translation sur le câble et d'amplifier le couple du moteur en un effort de traction sur le câble. Le système est non-réversible, de type vis-écrou, assurant ainsi le maintien de la force sur le câble même lorsque le moteur n'est plus alimenté.

Un capteur de position absolue mesure le déplacement du câble entre la position frein relâché et la position qui correspond au déplacement maximum du frein matérialisé par une butée mécanique. Ce capteur position frein peut être :

    1. Un capteur de position moteur
    2. Un capteur de position sur le réducteur
    3. Un capteur mesurant le déplacement du point d'accrochage du câble côté réducteur.

Le câble de serrage 5 relie le réducteur 4b aux étriers ou tambours de frein 6.

L'accrochage du câble contient un dispositif de désenclenchement pour la commande de secours manuelle 3. Le réenclenchement se fait mécaniquement lorsque le frein est en position totalement relâchée.

Les étriers ou tambours de freinage 6 sont des organes traditionnellement utilisés avec un frein de parking mécanique par commande par câble. Ils peuvent équiper les roues arrière ou avant du véhicule et assurent le blocage des roues lorsque le câble du frein de parking est tendu.

La force de serrage dépend du déplacement du câble.

La position du câble 5 qui correspond à la force maximum admissible peut varier en fonction de l'usure des étriers-plaquettes 6, du câble 5 ou du réducteur 4b du frein.

Le rôle de l'unité de pilotage du moteur 7 consiste à asservir la position du câble mesurée dans 4 à partir de la consigne donnée par le capteur de position de la palette 1.

Lorsque la valeur maximum de serrage est atteinte, l'asservissement en position du frein n'est plus possible et l'unité de pilotage 7 maintient la dernière position atteinte tant que la commande

palette 1 reste supérieure à cette dernière position atteinte.

La position maximum est détectée par la mesure du courant aux bornes du moteur. En effet, les équations du moteur sont du type :

$$ J \cdot \omega = C - \text{Force} \times \text{Réduction} $$

$$ C = kI $$

avec :

     J : inertie du moteur
     $\omega$ : vitesse de rotation du moteur
     C : Couple du moteur proportionnel au courant
     Force : force de serrage
     Réduction : bras de levier
     I : courant aux bornes du moteur
     k : coefficient constant.

Au départ, le courant est important pendant un temps très court car le couple est important pour faire passer le moteur de la vitesse nulle à sa vitesse maximum de déplacement.

Lorsque le moteur est lancé, la force étant faible, ce courant chute rapidement en dessous d'une valeur faible.

Lorsque le frein est serré, la vitesse de rotation du moteur s'annule, la force de serrage est très importante. Le courant étant proportionnel à cette force, celui-ci est important.

La méthode proposée pour détecter un serrage à la force maximale consiste à intégrer le courant I lorsque celui-ci est supérieur à la valeur du seuil bas. Lorsque la valeur du courant ainsi intégré est supérieure à un seuil prédéterminé, on estime que l'on a atteint la force de serrage maximum autorisée. L'appel de courant au début du serrage étant maintenu durant un temps très faible, sa contribution est faible. Le seuil bas permet de ne pas intégrer le courant pendant la phase de déplacement du moteur dans la zone où le câble n'est pas tendu.

Cette méthode permet de détecter le serrage maximum autorisé en compensant les usures des étriers/tambours ou éléments de frictions (disques/tambours, plaquettes ou segments). Ce dispositif n'est actif que lorsque l'on est en serrage. Cette méthode garantit donc en outre de disposer d'un potentiel de desserrage supérieur au potentiel de serrage afin d'éviter les grippages du système.

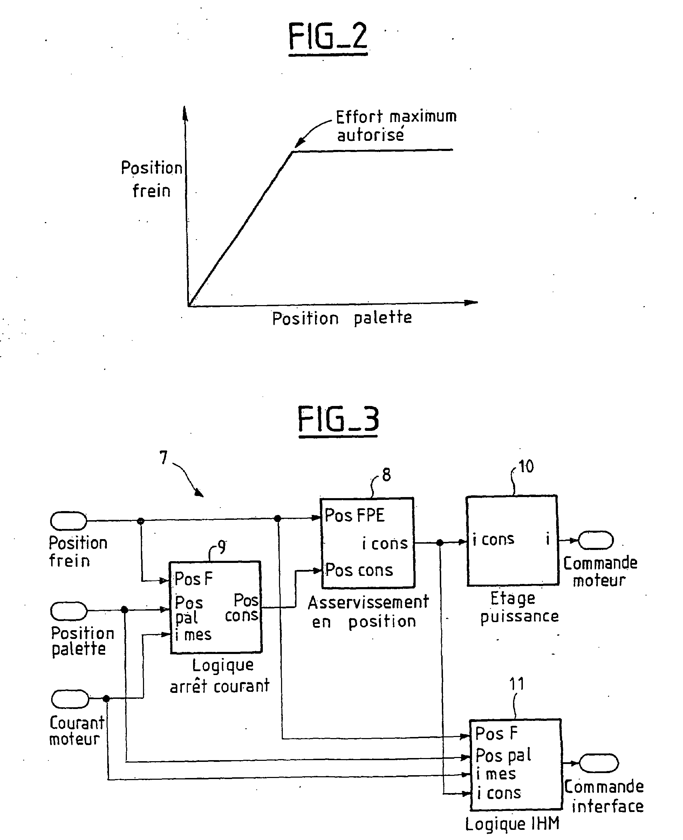

L'unité de pilotage 7 assure donc une relation proportionnelle entre la position de la palette de commande 1 et la position du frein tant que l'effort de serrage est inférieur à sa valeur maximum autorisée, et maintient la position frein si la position de la palette 1 est supérieure à la position palette correspondant à l'effort maximum (voir figure 2).

Lorsque le système de secours 3 est commandé par le conducteur, le câble 5 est désolidarisé mécaniquement du réducteur 4. Pour réenclencher le câble 5, il suffit au conducteur de positionner la palette 1 à sa position totalement desserrée. L'asservissement en position placera l'ensemble moteur 4a, réducteur 4b et câble 5 à la position totalement desserrée, assurant ainsi l'accouplement du câble 5. Aucun dispositif supplémentaire n'est donc nécessaire pour réactiver le frein après l'utilisation de la commande de secours.

Enfin, l'unité de pilotage 7 gère l'affichage pour l'interface 2. Si la position de la palette 1 est supérieure à une certaine valeur, un signal indique que le frein de parking est enclenché pour afficher un voyant de l'interface 2. Si un défaut est détecté, un signal est activé afin d'afficher un voyant clignotant de l'interface 2.

Les entrées de l'unité de pilotage 7 sont (voir figure 3) :

-      la position palette de commande,
-      la position frein, et
-      la mesure courant moteur.

Les sorties de l'unité de pilotage 7 sont :

-      la commande moteur, et
-      la commande des voyants de l'interface pour les défauts.

L'unité de pilotage contient quatre blocs principaux :

-      un bloc d'asservissement en position 8,

- un bloc de logique d'arrêt courant 9,
- un bloc d'étage de puissance 10, et
- un bloc de logique pour l'interface 11.

L'étage de puissance 10 transforme la consigne de courant en un courant à appliquer aux bornes du moteur par une commande en PWM (Modulation de Largeur d'Impulsions), par exemple.

Le bloc asservissement en position 8 calcule une erreur de position entre la position de l'ensemble moteur 4a, réducteur 4b et câble 5 et la consigne de position issue du bloc logique arrêt courant 9. Une régulation, par exemple de type Proportionnel Intégral Dérivé, transforme cette erreur en un courant de consigne à envoyer à l'étape de puissance 10.

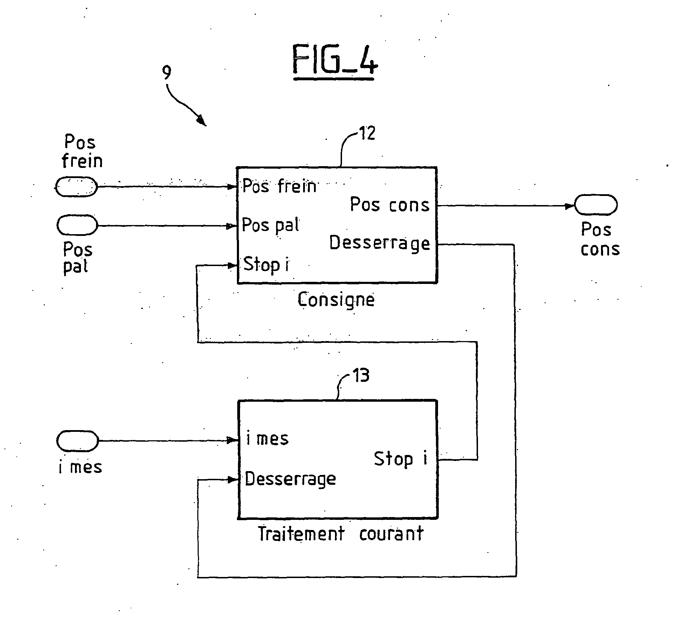

Le bloc logique arrêt courant 9 est détaillé dans la figure 4 et est composé de deux sous-blocs :

- le sous-bloc "consigne" 12, et
- le sous-bloc "traitement courant" 13.

Le sous-bloc consigne 12 fournit la position de consigne pour le bloc asservissement en position 8. Si un signal "stop i" n'est pas activé, alors la position de consigne est la position de la palette 1 (recopie du signal d'entrée "Pos pal"). Si le signal "stop i" est activé et si la position palette 1 est supérieure à la position de l'ensemble moteur 4a, réducteur 4b et câble 5, alors la position de consigne est la position du frein (recopie du signal "pos frein"). En outre, si la position de la palette 1 est inférieure à la position de consigne, le signal desserrage est activé. Ce mécanisme peut être réalisé par exemple à partir de quelques composants électroniques du type NOT, AND et bascule S-R.

Le sous-bloc "traitement courant" 13 intègre le courant du moteur I si celui-ci est supérieur à un "seuil bas" et compare cette valeur à un seuil. Si le courant intégré est supérieur à ce seuil, alors le signal "stop i" est activé. L'intégrateur est remis à zéro si le signal desserrage est activé. Ce mécanisme peut être réalisé par exemple à l'aide de quelques composants électroniques du type comparateur et intégrateur à base d'amplificateurs opérationnels.

Le bloc "logique interface" 11 détecte des dysfonctionnements et active les signaux pour l'interface.

Si la position palette 1 est supérieure à un seuil, le conducteur est prévenu par l'affichage d'un voyant.

Sur la détection de défaut, le conducteur est prévenu par l'affichage d'un voyant clignotant. Les conditions pouvant déclencher ce signal de défaut peuvent être la combinaison d'un ou plusieurs des cas suivants :

1. Dans le cas d'une redondance sur le capteur 1a de la palette 1, si les signaux issus des deux capteurs sont différents (panne sur la commande).
2. Si le courant de consigne reste non nul alors que la position de la palette 1 n'évolue plus depuis quelques secondes (panne électronique).

3. Si une consigne de courant n'est pas suivie d'un courant mesuré (panne électronique).

**Revendications**

1. Procédé de commande d'un moyen de freinage d'un véhicule, dans lequel, le conducteur ayant actionné un moteur de serrage de frein, on détecte le courant I consommé par le moteur de serrage de frein pour en déduire une force de serrage F, on compare la valeur de la force de serrage F à un plafond déterminé Fp, on maintient la force de serrage si celle-ci est supérieure au plafond Fp, sinon on alimente le moteur en fonction d'une consigne de serrage, **caractérisé par** ledit plafond Fp étant une charge électrique et la force F étant calculée par intégration du courant consommé.

2. Procédé selon la revendication 1, dans lequel la valeur de la force de serrage est calculé par intégration du courant consommé au dessus d'un seuil prédéterminé.

3. Procédé selon la revendication 1 ou 2, dans lequel le plafond est déterminé de façon que le moteur exerce au desserrage une force supérieure à celle rendue nécessaire par la force de serrage préalablement exercée.

4. Procédé selon l'une quelconque des revendications précédentes, dans lequel le moteur est asservi en position sur une palette de commande.

5. Procédé selon l'une quelconque des revendications 1 à 4, dans lequel l'ensemble formé par le moteur de serrage et le moyen de freinage est réversible, le maintien de la force de serrage est obtenu par le maintien de l'alimentation électrique du moteur à un courant maximal.

6. Procédé selon l'une quelconque des revendications 1 à 4, dans lequel l'ensemble formé par le moteur de serrage et le moyen de freinage est irréversible, le maintien de la force de serrage est obtenu par la coupure de l'alimentation électrique du moteur.

7. Système de commande d'un moyen de freinage de véhicule, comprenant un moteur (4a) de serrage de frein, un moyen de détection du courant I consommé par le moteur de serrage de frein, un moyen de comparaison d'une valeur de force de serrage par rapport à un plafond prédéterminé, un moyen de maintien de la force de serrage si la valeur est supérieure au plafond et un moyen d'alimentation du moteur en fonction d'une consigne de serrage si la valeur est inférieure au plafond, **caractérisé par** ledit plafond étant une charge électrique et ladite valeur de force de serrage étant calculée par l'intermédiaire d'un intégrateur du courant consommé.

**8.** Système selon la revendication 7, **caractérisé par le fait qu'**il comprend un moyen d'intégration du courant consommé au dessus d'un seuil prédéterminé.

**9.** Système selon la revendication 7 ou 8, **caractérisé par le fait qu'**il comprend une palette de commande (1) et un moyen d'asservissement en position du moteur sur la palette de commande.

**10.** Système selon l'une quelconque des revendications 7 à 9, **caractérisé par le fait qu'**il comprend un moyen de commande mécanique (3) du frein apte à inhiber l'action du moteur électrique.

**11.** Système selon l'une quelconque des revendications 7 à 10, **caractérisé par le fait qu'**il comprend un indicateur du fonctionnement (2).

**12.** Véhicule équipé d'un moyen de freinage et comprenant un système selon l'une quelconque des revendications 7 à 11.

**Claims**

**1.** Method of controlling a means of braking a vehicle, in which, the driver having actuated a brake application motor, the current I consumed by the brake application motor is detected so as to deduce therefrom an application force F, the value of the application force F is compared with a determined ceiling Fp, the application force is maintained if the latter is greater than the ceiling Fp, otherwise the motor is supplied as a function of an application setpoint, **characterized by** the said ceiling Fp being an electrical load and the force F being calculated by integrating the current consumed.

**2.** Method according to Claim 1, in which the value of the application force is calculated by integrating the current consumed above a predetermined threshold.

**3.** Method according to Claim 1 or 2, in which the ceiling is determined in such a way that the motor exerts on release a force greater than that rendered necessary by the previously exerted application force.

**4.** Method according to any one of the preceding claims, in which the motor is slaved in position to a control vane.

**5.** Method according to any one of Claims 1 to 4, in which the assembly formed by the application motor and the braking means is reversible, and the maintenance of the application force is obtained by maintaining the electrical power supply of the motor at a maximum current.

**6.** Method according to any one of Claims 1 to 4, in which the assembly formed by the application motor and the braking means is irreversible, and the maintenance of the application force is obtained by cutting off the electrical power supply of the motor.

**7.** System for controlling a vehicle braking means, comprising a brake application motor (4a), a means for detecting the current I consumed by the brake application motor, a means for comparing an application force value with respect to a predetermined ceiling, a means for maintaining the application force if the value is greater than the ceiling and a means for supplying power to the motor as a function of an application setpoint if the value is less than the ceiling, **characterized by** the said ceiling being an electrical load and the said application force value being calculated by way of an integrator of the current consumed.

**8.** System according to Claim 7, **characterized in that** it comprises a means for integrating the current consumed above a predetermined threshold.

**9.** System according to Claim 7 or 8, **characterized in that** it comprises a control vane (1) and a means for positionally slaving the motor to the control vane.

**10.** System according to any one of Claims 7 to 9, **characterized in that** it comprises a mechanical control means (3) for the brake able to disable the action of the electric motor.

**11.** System according to any one of Claims 7 to 10, **characterized in that** it comprises an indicator of operation (2).

**12.** Vehicle equipped with a braking means and comprising a system according to any one of Claims 7 to 11.

**Patentansprüche**

**1.** Verfahren zur Steuerung einer Bremseinrichtung eines Fahrzeugs, bei dem, wenn der Fahrer einen Motor zum Anziehen der Bremse betätigt hat, der vom Bremsanziehmotor verbrauchte Strom I erfasst wird, um daraus ein Anzugsmoment F abzuleiten, der Wert des Anzugsmoments F mit einer bestimmten Obergrenze Fp verglichen wird, das Anzugsmoment beibehalten wird, wenn es höher ist als die Obergrenze Fp, ansonsten der Motor in Abhängigkeit von einem Anzugseinstellwert gespeist wird, **dadurch gekennzeichnet, dass** die Obergrenze Fp eine elektrische Last ist und das Moment F durch Integration des verbrauchten Stroms berechnet wird.

2. Verfahren nach Anspruch 1, bei dem der Wert des Anzugsmoments durch Integration des verbrauchten Stroms oberhalb eines vorbestimmten Schwellwerts berechnet wird.

3. Verfahren nach Anspruch 1 oder 2, bei dem die Obergrenze so bestimmt wird, dass der Motor beim Lösen eine größere Kraft anwendet als diejenige, die durch das vorher ausgeübte Anzugsmoment erforderlich wurde.

4. Verfahren nach einem der vorhergehenden Ansprüche, bei dem der Motor auf eine Steuerungspalette positionsgeregelt wird.

5. Verfahren nach einem der Ansprüche 1 bis 4, bei dem die von dem Anziehmotor und der Bremseinrichtung gebildete Einheit umkehrbar ist, wobei die Aufrechterhaltung des Anzugsmoments durch die Aufrechterhaltung der elektrischen Versorgung des Motors mit einem maximalen Strom erreicht wird.

6. Verfahren nach einem der Ansprüche 1 bis 4, bei dem die von dem Anziehmotor und der Bremseinrichtung gebildete Einheit unumkehrbar ist, wobei die Aufrechterhaltung des Anzugsmoments durch das Abschalten der elektrischen Versorgung des Motors erreicht wird.

7. Steuersystem einer Bremseinrichtung eines Fahrzeugs, das einen Motor (4a) zum Anziehen der Bremse, eine Einrichtung zur Erfassung des vom Bremsanziehmotor verbrauchten Stroms I, eine Einrichtung zum Vergleich eines Anzugsmomentwerts mit einer vorbestimmten Obergrenze, eine Einrichtung für die Aufrechterhaltung des Anzugsmoments, wenn der Wert höher ist als die Obergrenze, und eine Einrichtung zur Versorgung des Motors in Abhängigkeit von einem Anzieheinstellwert, wenn der Wert unter der Obergrenze liegt, aufweist, **dadurch gekennzeichnet, dass** die Obergrenze eine elektrische Last ist und der Anzugsmomentwert mittels eines Integrators des verbrauchten Stroms berechnet wird.

8. System nach Anspruch 7, **dadurch gekennzeichnet, dass** es eine Einrichtung zur Integration des verbrauchten Stroms oberhalb eines vorbestimmten Schwellwerts aufweist.

9. System nach Anspruch 7 oder 8, **dadurch gekennzeichnet, dass** es eine Steuerungspalette (1) und eine Einrichtung zur Positionsregelung des Motors auf die Steuerungspalette aufweist.

10. System nah einem der Ansprüche 7 bis 9, **dadurch gekennzeichnet, dass** es eine mechanische Steuereinrichtung (3) der Bremse aufweist, die in der Lage ist, die Wirkung des Elektromotors zu verhindern.

11. System nach einem der Ansprüche 7 bis 10, **dadurch gekennzeichnet, dass** es einen Betriebsanzeiger (2) aufweist.

12. Fahrzeug, das mit einer Bremseinrichtung versehen ist und ein System nach einem der Ansprüche 7 bis 11 aufweist.

# FIG_1

# FIG_2

# FIG_3

## FIG_4

Pos frein

Pos pal

12

Pos frein

Pos pal

Stop i

Pos cons

Desserrage

Consigne

Pos cons

13

i mes

i mes

Desserrage

Stop i

Traitement courant

**EP 1 236 632 B1**

**RÉFÉRENCES CITÉES DANS LA DESCRIPTION**

**Documents brevets cités dans la description**

- WO 9943968 A